# FASCICULE DE BREVET EUROPEEN

(11) **EP 4 632 778 B1**
(45) Date de publication et mention de la délivrance du brevet: **21.10.2026**
(21) Numéro de dépôt: 25169553.2
(22) Date de dépôt: 09.04.2025
(51) Int. Cl.: H01H 9/54

(54) **DISPOSITIF DE PROTECTION ÉLECTRIQUE, INSTALLATION ÉLECTRIQUE ET PROCÉDÉ DE COMMANDE ASSOCIÉS**
ELEKTRISCHE SCHUTZVORRICHTUNG, ELEKTRISCHE ANLAGE UND STEUERUNGSVERFAHREN DAFÜR
ELECTRICAL PROTECTION DEVICE, ASSOCIATED ELECTRICAL INSTALLATION AND CONTROL METHOD

(30) Priorité: 10.04.2024 FR 2403695
(43) Date de publication de la demande: 15.10.2025
(73) Titulaire: SCHNEIDER ELECTRIC INDUSTRIES SAS, 92500 Rueil-Malmaison (FR)
(72) Inventeur: HERAUD, Sébastien, 38100 GRENOBLE (FR); ORBAN, Rémy, 38410 SAINT MARTIN D'URIAGE (FR); SALVETTI, Lucas, 38320 EYBENS (FR); CHAUVE, Vincent, 38690 COLOMBE (FR)
(74) Mandataire: Lavoix

(56) Documents cités:
- WO-A2-2014/177874
- US-B2- 10 389 262
- US-B2- 11 715 945

## Description

La présente invention concerne un dispositif de protection électrique, une installation électrique et un procédé de commande associés.

Il est connu d'utiliser des dispositifs de protection électrique comprenant un interrupteur mécanique, et une cellule d'interruption comprenant au moins un module de commutation comprenant élement semi-conducteur connecté en parallèle avec un élément de limitation de tension. Ces dispositifs de protection sont également appelés disjoncteurs hybrides. US2022122801A1 décrit un disjoncteur hybride pour un courant continu haute tension, comprenant un disjoncteur prinicipal avec plusieurs modules de commutation connectés en série. Lorsqu'un défaut de type court-circuit est détecté et que le courant électrique doit être interrompu, les modules de commutation sont ouverts successivement, permettant de réduire le temps d'interruption du défaut de type court-circuit et de limiter le courant pic dans l'installation.

Cependant, ce disjoncteur hybride connu comprend un interrupteur auxiliaire, connecté en série de l'interrupteur mécanique, un ensemble comprenant l'interrupteur auxiliaire et l'interrupteur mécanique étant connecté en parallèle du disjoncteur principal. L'interrupteur auxiliaire génère des pertes électriques importantes, par exemple des pertes causées par dissipation thermique, augmente le nombre de composants nécessaires à la réalisation du disjoncteur hybride. De plus, l'ouverture successive des modules de commutation ne permet pas de réduire le temps d'interruption du défaut de type court-circuit et de limiter le courant pic de manière optimale.

Le document US 11 715 945 B2 décrit un dispositif de protection électrique selon le préambule de la revendication 1.

Le but de l'invention est alors de proposer un dispositif de protection permettant de réduire les pertes électriques et de limiter le nombre de composants tout en réduisaint le temps d'interruption du défaut de type court-circuit et en limitant le courant pic.

A cet effet, l'invention a pour objet un dispositif de protection électrique, configuré pour être connecté entre une source et une charge, le dispositif comprenant :
- un interrupteur mécanique, configuré pour basculer entre une configuration fermée, dans laquelle l'interrupteur mécanique conduit un courant circulant entre la source et la charge, et une configuration ouverte, dans laquelle l'interrupteur mécanique ne conduit pas le courant ;
- une cellule d'interruption, connectée en parallèle de l'interrupteur mécanique, la cellule d'interruption comprenant N modules de commutation connectés en série les uns aux autres, N étant supérieur ou égal à 2, chaque module de commutation comprenant :
   o au moins un élément semi-conducteur ;
   o un élément de limitation de tension, connecté en parallèle du ou des éléments semi-conducteurs,
   chaque élément de limitation de tension ayant une tension de limitation, différente de la tension de limitation des autres éléments de limitation de tension, chaque module de commutation étant configuré pour basculer entre une configuration passante, dans laquelle le courant circule dans le ou dans l'un des éléments semi-conducteurs du module de commutation, et une configuration bloquée, dans laquelle si le courant circule dans le module de commutation, il circule dans l'élément de limitation de tension ;
- un capteur de courant configuré pour mesurer une intensité du courant ;
- une unité de contrôle comprenant :
   o un module de détection configuré pour détecter un défaut électrique de type court-circuit en fonction de l'intensité mesurée par le capteur de courant ;
   o un module de commande d'interrupteur mécanique, configuré pour commander l'interrupteur mécanique dans la configuration ouverte lorsque qu'un défaut électrique est détecté,
   o un module de commande de cellule, configuré pour commander chaque module de commutation dans la configuration bloquée.

Selon l'invention, une entrée de l'interrupteur mécanique et une entrée de la cellule d'interruption sont connectées l'une à l'autre par une liaison électrique non interruptible et une sortie de l'interrupteur mécanique et une sortie de la cellule d'interruption sont connectées l'une à l'autre par une liaison électrique non interruptible,
les tensions de limitation, seules et/ou sommées entre elles, forment au moins 2^{N}-1 paliers distincts,
et le module de commande de cellule est configuré pour :
   o commander en configuration bloquée le ou les modules de commutation dont les tensions de limitation des éléments de limitation de tension forment un palier donné, le palier donné étant le plus grand palier inférieur ou égal à une tenue diélectrique de l'interrupteur mécanique, et
   o commander en configuration passante les autres modules de commutation.

Le fait que la liaison électrique soit non interruptible signifie que le dispositif ne comprend pas d'interrupteur auxiliaire. Ainsi, grâce à l'invention, le nombre de composants du dispositif électrique est réduit et les pertes électriques et thermiques sont minimisées, ce qui permet d'améliorer les performances du dispositif.

De plus, grâce à l'invention, les modules de commutation ne sont plus commandés successivement, mais de sorte que les tensions de limitation des différents modules de commutations soient combinées afin de former un maximum de paliers, en l'occurrence 2^{N}-1 paliers, et non pas N paliers. Ainsi, le courant est limité de manière plus fine, dès que la tenue diélectrique de l'interrupteur mécanique est supérieure ou égale à l'un des paliers. Cela permet, sans augmenter le nombre de modules de commutation par rapport au cas où les modules de commutation sont commandés successivement, de limiter un accroissement du courant causé par le défaut électrique de type court-circuit le plus tôt possible, et donc de limiter les contraintes dans les charges ou même dans des câbles connectant le dispositif, la source et la charge tout en garantissant un courant de fuite des éléments de limitation de tension compatible avec la tenue énergétique des composants du dispositif.

Suivant d'autres aspects avantageux de l'invention, le dispositif comprend une ou plusieurs des caractéristiques suivantes, prises isolément ou suivant toutes les combinaisons techniquement possibles :
- Chaque module de commutation comprend deux éléments semi-conducteurs qui sont unidirectionnels en courant et connectés l'un à l'autre en anti-série, et pour chaque élément semi-conducteur, une diode est connectée en anti-parallèle de l'élément semi-conducteur.
- La cellule d'interruption comprend deux branches de redressement, l'entrée et la sortie de la cellule d'interruption formant respectivement un point milieu de l'une des branches de redressement, chaque branche de redressement comprenant deux diodes disposées de part et d'autre du point milieu, connectées en anti-série l'une par rapport à l'autre ;
- les modules de commutation sont connectés en parallèle des branches de redressement ; et
- chaque module de commutation comprend un seul élément semi-conducteur connecté en parallèle de l'élément de limitation de tension.
- Le dispositif comprend au moins trois modules de commutation.
- L'un des modules de commutation, dit module de commutation à tension variable, comprend une pluralité d'éléments de limitation de tension ayant chacun une tension de limitation différente les unes des autres et différente des tensions de limitation des éléments de limitation de tension des autres modules de commutation ;
- chaque élément de limitation de tension du module de commutation à tension variable est associé à un organe de commutation avec lequel il est connecté en série, chaque élément de limitation de tension et son organe de commutation associé étant connectés en parallèle du ou des éléments semi-conducteurs ;
- les paliers sont formés au plus d'une tension de limitation d'un élément de limitation de tension du module de commutation à tension variable, éventuellement sommée avec une ou des tensions de limitation des autres modules de commutation ; et
- le module de commande de cellule est en outre configuré pour, lorsqu'un élément de tension de limitation donné du module de commutation à tension variable forme partie d'un palier donné, le palier donné étant le plus grand palier inférieur ou égal à la tenue diélectrique de l'interrupteur mécanique, basculer l'organe de commutation associé à l'élément de tension de limitation donné d'un état passant à un état bloqué, et commander les autres organes de commutation du module de commutation à tension variable dans l'état bloqué.
- Le dispositif comprend en outre un sectionneur, connecté en série à l'interrupteur mécanique sans être connecté en parallèle de la cellule d'interruption.
- Une durée de déclenchement entre la détection du défaut électrique de type court-circuit par le module de détection et un passage de tous les modules de commutation dans la configuration bloquée est inférieure à 1ms, de préférence inférieure à 800 µs, de préférence encore inférieure à 400 µs.

L'invention concerne également une installation électrique comprenant une source, une charge connectée à la source, et un dispositif de protection électrique ainsi que décrit précédemment, connecté entre la source et la charge, une tension nominale du courant circulant entre la source et la charge étant inférieure à 1500 V.

L'invention concerne également un procédé de commande d'un dispositif de protection électrique, le procédé comprenant au moins les étapes suivantes :
- mesure de l'intensité du courant par le capteur de courant ;
- détection d'un défaut électrique de type court-circuit par le module de détection, en fonction de l'intensité mesurée par le capteur de courant ;
- lorsqu'un défaut électrique de type court-circuit est détecté, commande de l'interrupteur mécanique dans la configuration ouverte par le module de commande d'interrupteur mécanique ; et
- lorsque la tenue diélectrique de l'interrupteur mécanique est supérieure ou égale à un palier donné, le palier donné étant le plus grand palier inférieur ou égal à la tenue diélectrique de l'interrupteur mécanique, commande du ou des modules de commutation dont les tensions de limitation des éléments de limitation forment le palier donné, et des autres modules de commutation en configuration passante.

De façon avantageuse, le procédé comprenant en outre, lorsqu'un élément de tension de limitation donné du module de commutation à tension variable forme partie d'un palier donné et la tenue diélectrique de l'interrupteur mécanique est supérieure ou égale au palier donné, une étape de commande du composant de commutation associé à l'élément de tension de limitation donné dans l'état passant, et les autres composants de commutation du module de commutation à tension variable dans l'état bloqué.

L'invention apparaîtra plus clairement à la lecture de la description qui va suivre, donnée uniquement à titre d'exemple non limitatif, et faite en référence aux dessins dans lesquels :
- [Fig. 1] la figure 1 est un schéma d'une installation électrique comprenant un dispositif de protection électrique conforme à un premier mode de réalisation de l'invention ;
- [Fig. 2] la figure 2 est un schéma d'une cellule d'interruption du dispositif de protection électrique selon le premier mode de réalisation de l'invention ;
- [Fig. 3] la figure 3 est une représentation graphique d'une tension et d'une intensité d'un courant circulant dans un dispositif de protection conforme à l'invention en fonction du temps ;
- [Fig. 4] la figure 4 est un logigramme d'un procédé de commande selon l'invention.
- [Fig. 5] la figure 5 est un schéma d'une cellule d'interruption d'un dispositif de protection électrique selon un deuxième mode de réalisation de l'invention ; et
- [Fig. 6] la figure 6 est un schéma d'une cellule d'interruption d'un dispositif de protection électrique selon un troisième mode de réalisation de l'invention.

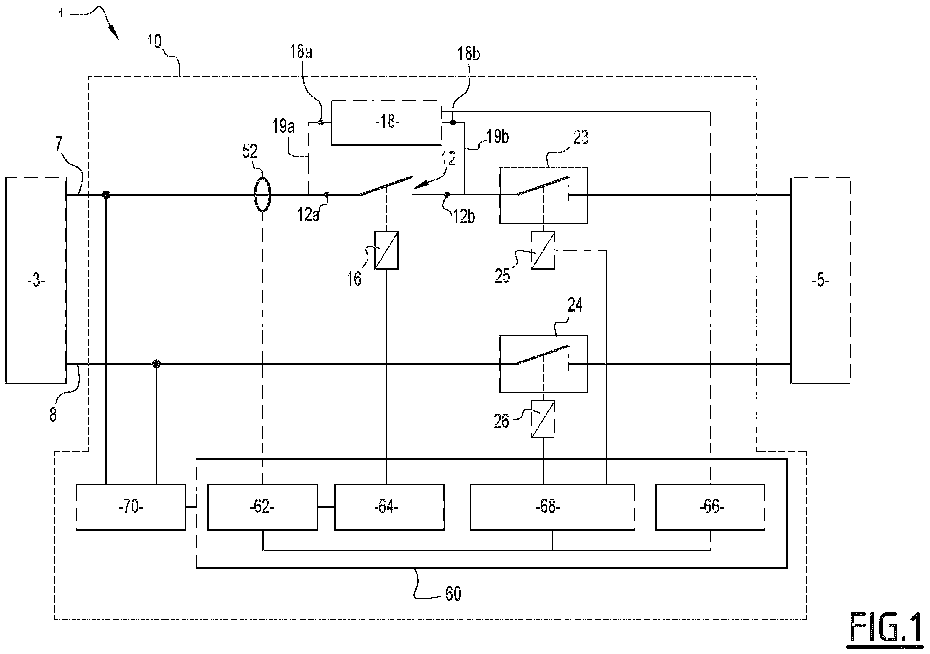

La figure 1 est un schéma d'une installation électrique 1 comprenant une source 3 et une charge 5, électriquement reliées entre elles par un conducteur de phase 7 et un conducteur de neutre 8. La source 3 fournit de l'électricité et est, par exemple, un générateur électrique ou un réseau électrique, par exemple un réseau électrique de secteur. La charge 5 est un appareil consommant de l'électricité, comme un appareil électrique domestique, un équipement industriel comme un moteur électrique, ou encore un serveur. Ainsi, un courant électrique, dit simplement courant par la suite, circule entre la source 3 et la charge 5 à travers le conducteur de phase 7, et revient à la source 3 par le conducteur de neutre 8.

Le courant est un courant basse tension, c'est-à-dire qu'une tension nominale Uₛ du courant, dite aussi tension du secteur, est inférieure à 1500 V. Le courant est un courant alternatif ou, en variante, un courant continu.

L'installation électrique 1 comprend également un dispositif de protection électrique 10, également appelé dispositif par la suite, connecté entre la source 3 et la charge 5. Le dispositif 10 est configuré pour basculer entre une configuration armée, dans laquelle le dispositif 10 conduit le courant circulant entre la source 3 et la charge 5, et une configuration déclenchée, dans laquelle le dispositif 10 isole électriquement la source 3 de la charge 5.

Le dispositif 10 comprend un interrupteur mécanique 12, également connu sous le nom d'interrupteur de bypass, ou d'interrupteur mécanique rapide, également appelé FMS (de l'anglais Fast Mechanical Switch). L'interrupteur mécanique 12 est connecté en série au conducteur de phase 7, par une entrée 12a et une sortie 12b, et est configuré pour basculer entre une configuration fermée, dans laquelle il conduit le courant circulant entre la source 3 et la charge 5, et une configuration ouverte, dans laquelle il ne conduit pas le courant. Dans la figure 1, l'interrupteur mécanique 12 est représenté en configuration ouverte. Le dispositif 10 comprend avantageusement un actionneur 16 qui, lorsqu'il est activé, bascule l'interrupteur mécanique 12 en configuration ouverte.

Le dispositif 10 comprend une cellule d'interruption 18, connectée en parallèle de l'interrupteur mécanique 12, de telle sorte que l'entrée 12a et la sortie 12b de l'interrupteur mécanique 12 sont connectées respectivement à une entrée 18a et à une sortie 18b de la cellule d'interruption 18. Plus spécifiquement, l'entrée 12a de l'interrupteur mécanique 12 et l'entrée 18a de la cellule d'interruption 18 sont connectées par la liaison électrique 19a, qui est non interruptible et la sortie 12b de l'interrupteur mécanique 12 est connectée à la sortie 18b de la cellule d'interruption 18 par la liaison électrique 19b, qui est également non interruptible. Autrement dit, les liaisons électriques 19a et 19b sont chacune un câble ou un fil électrique ; aucune des liaisons électriques 19a et 19b ne comprennent d'interrupteur ou plus généralement de moyen d'interruption du courant électrique. La cellule d'interruption 18 est configurée pour laisser passer ou pour interrompre le courant la traversant, ainsi qu'expliqué par la suite.

Le dispositif 10 comprend avantageusement un premier sectionneur 23 et, de manière optionnelle, un deuxième sectionneur 24, connectés respectivement au conducteur de phase 7 et au conducteur de neutre 8. En particulier, le sectionneur 23 est connecté au conducteur de phase 7 en série de l'interrupteur mécanique 12, sans être connecté en parallèle de la cellule d'interruption 18. En outre, le sectionneur 23 est connecté en série au conducteur de neutre 8. Les sectionneurs 23 et 24 sont configurés pour basculer entre une configuration fermée dans laquelle les sectionneurs 23 et 24 conduisent le courant, et une configuration ouverte, dans laquelle les sectionneurs 23 et 24 ne conduisent pas le courant. Avantageusement, et ainsi que représenté sur la figure 1, le dispositif 10 comprend un actionneur 25 du premier sectionneur 23 et un actionneur 26 du deuxième sectionneur 24 qui, lorsqu'ils sont activés, interagissent respectivement avec le premier sectionneur 23 et le deuxième sectionneur 24 pour les faire basculer en configuration ouverte. Les actionneurs 25 et 26 sont, par exemple, des bobines et sont activés lorsqu'un courant circule dans les spires des bobines.

Les sectionneurs 23 et 24 sont configurés pour basculer en position ouverte en particulier lorsqu'aucun courant ne circule entre la source 3 et la charge 5, autrement dit, lorsque le courant a été interrompu, par l'interrupteur mécanique 12 et/ou par la cellule d'interruption 18.

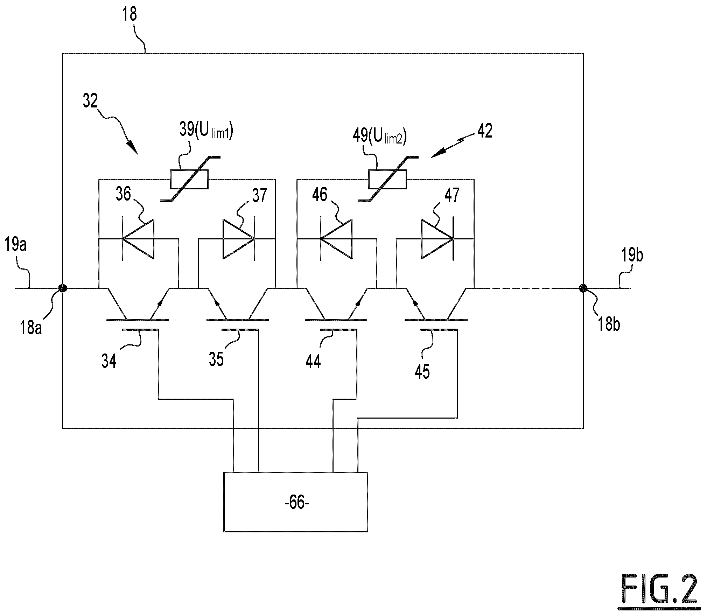

La cellule d'interruption 18 comprend N modules de commutation, par exemple N=2 modules de commutation 32 et 42, ainsi que visible à la figure 2. En variante, les modules de commutation sont au nombre de trois ou plus, ainsi que symbolisé par la ligne en pointillés à la figure 2.

Les modules de commutation 32 et 42 sont connectés en série les uns aux autres. Chaque module de commutation 32 et 42 comprend au moins un élément semi-conducteur commandable en commutation, par exemple au moins un thyristor ou au moins un transistor, tels qu'un transistor à effet de champ, également appelé FET (de l'anglais Field Effect Transistor), un transistor à effet de champ à grille isolée, également appelé MOSFET (de l'anglais Metal Oxide Semiconductor Field Effect Transistor), un transistor bipolaire à grille isolée, ou IGBT (de l'anglais Insulated Gate Bipolar Transistor), ou une combinaison de ces différents éléments semi-conducteurs.

Dans l'exemple de la figure 2, chaque module de commutation 32 comprend deux transistors 34 et 35 unidirectionnels en courant, par exemple deux IGBT. Le sens de conduction des transistors 34 et 35 est indiqué par une flèche sur chaque transistor 34, 35. Les transistors 34 et 35 sont connectés l'un à l'autre en anti-série, c'est-à-dire que les transistors 34 et 35 sont connectés en série mais tête-bêche, de sorte à ne pas conduire le courant en même temps. Deux diodes 36 et 37 sont connectées respectivement aux transistors 34 et 35. La diode 36 est connectée en anti-parallèle du transistor 34, c'est-à-dire que la diode 36 et le transistor 34 ne conduisent pas le courant électrique en même temps : si le transistor 34 est passant, la diode 36 est bloquée et inversement. Autrement dit le transistor 34 et la diode 36 sont connectés en parallèle tête-bêche. Il en est de même pour le transistor 35 et la diode 37. Cette disposition permet à chaque module de commutation 32 et 42 de conduire du courant alternatif sans interruption à chaque changement de signe du courant.

Le module de commutation 32 comprend un élément de limitation de tension 39. L'élément de limitation de tension 39 est connecté en parallèle d'un ensemble formé par les transistors 34 et 35, et est par exemple une varistance à oxyde métallique, ou MOV (de l'anglais Metal Oxyde Varistor), une diode transil ou un éclateur à gaz. L'élément de limitation de tension 39 a une tension de limitation Uₗᵢₘ₁, qui correspond à une tension à ses bornes lorsqu'il est traversé par le courant circulant entre la source 3 et la charge 5.

De même, le module de commutation 42 comprend deux transistors 44 et 45 et deux diodes 46 et 47, similaires au moins fonctionnellement et connectées de manière identique à ce qui a été décrit pour les transistors 34, 35 et les diodes 36 et 37. Le module de commutation 42 comprend un élément de limitation de tension 49, similaire au moins fonctionnellement à l'élément de limitation de tension 39 et connecté en parallèle des transistors 44 et 45. L'élément de limitation de tension 39 a une tension de limitation de tension Uₗᵢₘ₂.

Les tensions de limitation Uₗᵢₘ₁ et Uₗᵢₘ₂ sont différentes, par exemple la tension de limitation Uₗᵢₘ₁ est égale à 440V et la tension de limitation Uₗᵢₘ₂ est égale à 900V.

Les modules de commutation 32 et 42 sont configurés pour basculer entre une configuration passante et une configuration bloquée. Dans la configuration passante, le courant circule dans le module de commutation 32 en circulant soit dans le transistor 34 et la diode 37, soit dans le transistor 35 et la diode 36 et circule dans le module de commutation 42 soit dans le transistor 44 et la diode 47, soit dans le transistor 45 et la diode 46. En particulier, lorsque le courant traversant le dispositif 10 est alternatif, le transistor 34, la diode 37, le transistor 44 et la diode 47 conduisent le courant dans un premier temps puis, lorsque le courant change de sens, le transistor 35, la diode 36, le transistor 45 et la diode 46 conduisent le courant. Plus généralement, dans la configuration passante, au moins l'un des transistors 34, 35 et au moins l'un des transistors 44, 45 conduisent le courant.

Dans la configuration bloquée, les transistors 34 et 35 ne conduisent pas le courant et, si du courant circule dans le module de commutation 32, il circule à travers l'élément de limitation de tension 39. De même, lorsque le module de commutation 42 est dans la configuration bloquée, les transistors 44 et 45 ne conduisent pas le courant et si du courant circule dans le module de commutation 42, il circule à travers l'élément de limitation de tension 49.

Ainsi, dans la configuration bloquée, les tensions aux bornes des modules de commutation 32 et 42 sont respectivement la tension de limitation Uₗᵢₘ₁ et la tension de limitation Uₗᵢₘ₂.

Par effet de combinaison, les tensions de limitation Uₗᵢₘ₁ et Uₗᵢₘ₂ forment 2^{N}-1 paliers, distincts les uns des autres. Ici, le nombre Np de paliers de commutation est égal à Np= 2^{N}-1, où N est le nombre de modules de commutation. Les paliers sont formés par les tensions de limitation Uₗᵢₘ₁ et Uₗᵢₘ₂ prises seules, ou sommées l'une à l'autre. La liste des paliers obtenus est représentée dans la table ci-dessous. Pour N=2 modules de commutation, trois paliers distincts P1, P2, P3 sont obtenus, avec 3 = 2²-1. Ici, P1 est le palier avec la valeur la plus faible, égale à Uₗᵢₘ₁ qui vaut par exemple 440V, P2 est supérieur à P1, et a une valeur égale à Uₗᵢₘ₂ qui vaut par exemple à 900V, et P3 est supérieur à P2, avec une valeur égale la somme de Uₗᵢₘ₁ et Uₗᵢₘ₂, par exemple 1340V. De manière avantageuse, le palier P3, ou de manière générale, le plus grand palier, est de l'ordre de 1,5 fois la tension de secteur Uₛ.

**[Table 1]**

| Palier | Valeur |
|---|---|
| P1 | Uₗᵢₘ₁ |
| P2 | Uₗᵢₘ₂ |
| P3 | Uₗᵢₘ₁ + Uₗᵢₘ₂ |

Le dispositif de contrôle 10 comprend également un capteur de courant 52. Le capteur de courant 52 est configuré pour mesurer une intensité I du courant circulant entre la source et la charge, et en particulier le courant circulant dans le conducteur de phase 7. Le capteur de courant 52 est, par exemple, un tore de Rogowski.

Le dispositif de contrôle 10 comprend une unité de contrôle 60, comprenant un module de détection 62, connecté au capteur de courant 52 et configuré pour détecter un défaut électrique de type court-circuit en fonction de l'intensité I, mesurée par le capteur de courant 52. Dans la suite, on emploiera le terme court-circuit pour désigner un défaut électrique de type court-circuit.

L'unité de contrôle 60 comprend également un module de commande d'interrupteur mécanique 64, un module de commande de cellule 66 et, avantageusement, un module de commande de sectionneurs 68, connectés au module de détection 62 et respectivement configurés pour commander l'interrupteur mécanique 12, la cellule d'interruption 18 et les sectionneurs 23 et 24.

Les modules de commande d'interrupteur mécanique 64 et de sectionneurs 68 sont avantageusement configurés pour actionner respectivement les actionneurs 16, 25 et 26, afin de basculer l'interrupteur 12 et les sectionneurs 23 et 24 en configuration ouverte.

Le module de commande de cellule 66 est configuré pour commander en configuration bloquée le ou les modules de commutation 32, 42 dont les tensions de limitation Uₗᵢₘ₁, Uₗᵢₘ₂ des éléments de limitation 29 et 39 forment un palier donné. Le palier donné étant le plus grand palier inférieur ou égal à la tenue diélectrique de l'interrupteur mécanique 12 et commander en configuration passante les autres modules de commutation, comme il sera expliqué par la suite.

L'unité de contrôle 60 est un circuit électronique conçu pour manipuler et/ou transformer des données représentées par des quantités électroniques ou physiques dans des registres de l'unité de contrôle 60 et/ou des mémoires, en d'autres données similaires correspondant à des données physiques dans les mémoires de registres ou d'autres types de dispositifs d'affichage, de dispositifs de transmission ou de dispositifs de mémorisation.

En tant qu'exemples spécifiques, l'unité de contrôle 60 est réalisée sous forme d'un composant logique programmable, tel qu'un FPGA (de l'anglais Field Programmable Gate Array), ou encore d'un circuit intégré, tel qu'un ASIC (de l'anglais Application Specific Integrated Circuit).

En variante non représentée, l'unité de contrôle 60 comprend une unité de traitement d'informations formée par exemple d'une mémoire et d'un processeur associé à la mémoire. Le module de détection 62, le module de commande d'interrupteur mécanique 64, le module de commande de cellule 66 et le module de commande de sectionneurs 68 sont réalisés chacun sous forme d'un logiciel, ou d'une brique logicielle, exécutable par le processeur. La mémoire de l'unité de contrôle 60 est alors apte à stocker un logiciel de détection, un logiciel de commande d'interrupteur mécanique, un logiciel de commande de cellule et un logiciel de commande de sectionneurs. Le processeur est alors apte à exécuter chacun des logiciels parmi le logiciel de détection, le logiciel de commande d'interrupteur mécanique, le logiciel de commande de cellule et le logiciel de commande de sectionneurs.

En variante non représentée, le module de détection 62, le module de commande d'interrupteur mécanique 64, le module de commande de cellule 66 et le module de commande de sectionneurs 68 sont réalisés chacun sous forme d'un composant logique programmable, tel qu'un FPGA (de l'anglais Field Programmable Gate Array), d'un circuit intégré, tel qu'un ASIC (de l'anglais Application Specific Integrated Circuit) ou encore sous la forme d'un composant analogique.

De manière avantageuse, le dispositif 10 comprend également un module d'alimentation 70, connecté aux conducteurs 7 et 8 et à l'unité de contrôle 60, afin d'alimenter en électricité l'unité de contrôle 60. En variante non représentée, le module d'alimentation 70 est connecté à un circuit externe, non relié aux conducteurs 7 et 8. En variante non représentée, le module d'alimentation 70 est alimenté par effet transformateur à partir du courant circulant dans les conducteurs 7 et 8.

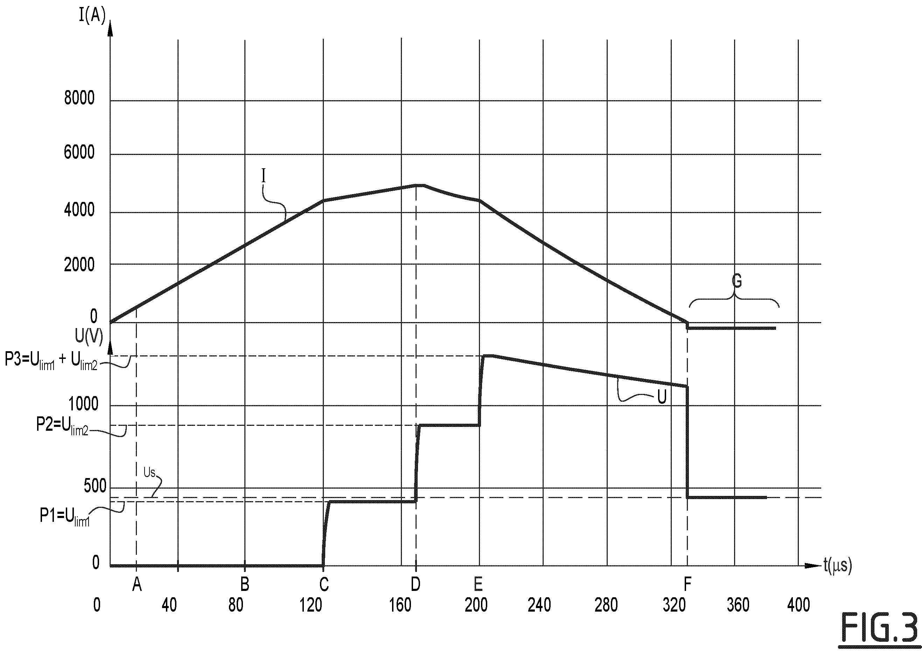

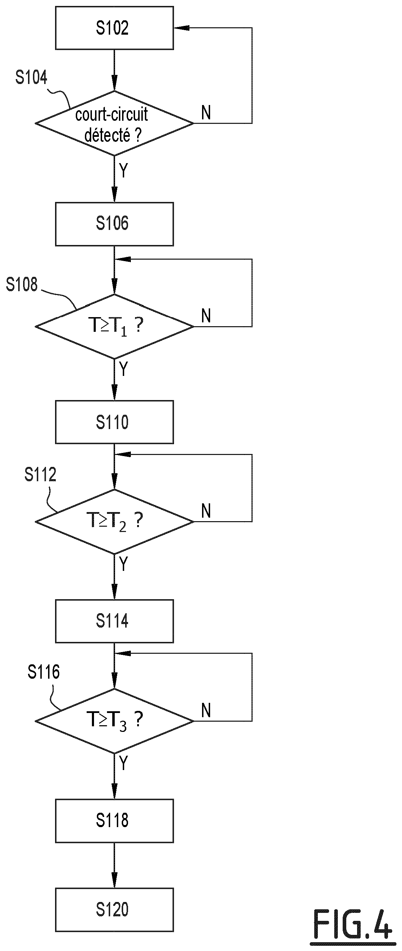

Un procédé de fonctionnement du dispositif 10 va maintenant être expliqué, en regard des figures 3 et 4.

Initialement, de manière avantageuse, le dispositif 10 est en configuration armée, c'est-à-dire que les sectionneurs 23 et 24 sont en configuration fermée, l'interrupteur mécanique 12 est en configuration fermée, et les transistors 34, 35, 44 et 45 sont passants. A cause d'une résistance interne inférieure à celle des transistors 34, 35, 44 et 45, l'interrupteur mécanique 12 conduit l'ensemble du courant électrique circulant dans le dispositif 10. Une tension U aux bornes du dispositif 10 est sensiblement nulle.

Le capteur de courant 52 mesure l'intensité I du courant circulant dans le conducteur de phase 7, à l'étape S102.

L'unité de contrôle 60 reçoit la mesure de l'intensité I et détecte, via le module de détection 62, si un court-circuit est présent entre la source 3 et la charge 5, à l'étape S104. Si un court-circuit n'est pas détecté, alors le capteur de courant 52 effectue à nouveau l'étape S102 et continue de mesurer l'intensité I du courant. Un fonctionnement itératif est alors mis en œuvre. Si un court-circuit est détecté, ce qui correspond à l'instant A de la figure 3, alors l'unité de contrôle 60 commande l'interrupteur mécanique 12 en basculement dans la configuration ouverte, via le module de commande d'interrupteur mécanique 64, lors de l'étape S106. L'ouverture de l'interrupteur mécanique 12 correspond à l'instant B sur la figure 3.

Lorsqu'un court-circuit est présent entre la source 3 et la charge 5, ou dans la charge 5, l'intensité I augmente de manière importante et rapide, par exemple de plusieurs dizaines d'ampères par microseconde. Ainsi, le court-circuit est par exemple détecté lorsque l'intensité I est supérieure à un seuil prédéterminé, ou lorsqu'une dérivée de l'intensité I est supérieure à un seuil prédéterminé, ou encore lorsqu'une combinaison de conditions sur l'intensité I et sa dérivée sont remplies.

Lorsque l'interrupteur mécanique 12 est en configuration ouverte, le courant électrique est transféré de l'interrupteur mécanique 12 à la cellule d'interruption 18. Cependant, l'ouverture de l'interrupteur mécanique 12 génère un arc électrique et une ionisation du milieu entre des contacts de l'interrupteur mécanique 12. Cela diminue une tenue diélectrique de l'interrupteur mécanique 12. Ainsi, avant de réduire ou d'interrompre le courant circulant entre la source 3 et la charge 5, il est nécessaire d'attendre un rétablissement d'une tenue diélectrique de l'interrupteur mécanique 12 suffisante, faute de quoi un re-claquage peut survenir aux bornes de l'interrupteur mécanique 12, c'est-à-dire un réamorçage du courant au travers des contacts de l'interrupteur mécanique 12, alors que ce dernier est en configuration ouverte, entraînant l'endommagement de l'interrupteur mécanique 12. Le dispositif 10 ne pourra alors ni réduire ni interrompre le courant.

La tenue diélectrique de l'interrupteur mécanique 12 augmente avec le temps, jusqu'à devenir supérieure à un ou plusieurs paliers P1, P2, P3. Dans l'exemple décrit ici, P1 est le palier le plus petit, ainsi, la tenue diélectrique de l'interrupteur mécanique 12 devient supérieure ou égale au palier P1 tout en étant inférieure aux paliers P2 et P3. P1 est alors le plus grand palier inférieur ou égal à la tenue diélectrique de l'interrupteur mécanique 12.

De préférence, la durée nécessaire entre le moment où l'interrupteur mécanique 12 bascule en configuration ouverte et le moment où la tenue diélectrique de l'interrupteur mécanique 12 devient égale au palier P1 est égale à un premier seuil d'attente T₁. Ainsi, une durée d'attente T est mesurée à partir du moment où l'interrupteur mécanique 12 bascule en configuration ouverte. L'unité de contrôle 60 détermine si la durée d'attente T est supérieure ou égale au premier seuil d'attente T₁, à l'étape S108. Si ce n'est pas le cas, alors l'unité de contrôle 60 attend une durée prédéterminée puis effectue à nouveau l'étape S108. Un fonctionnement itératif est alors mis en oeuvre.

Si la durée d'attente T est supérieure ou égale au premier seuil d'attente T₁, la tenue diélectrique de l'interrupteur mécanique 12 est égale ou supérieure au palier P1, formé seulement par la tension de limitation Uₗᵢₘ₁. Le module de commande de cellule 66 commande le module de commutation 32 en configuration bloquée à l'étape S110, qui correspond à l'instant C sur la figure 3. Les transistors 36 et 37 sont bloqués et ne conduisent pas le courant, qui circule alors dans l'élément de limitation de tension 39 et dans le module de commutation 42. La tension U aux bornes du dispositif 10, et donc aux bornes de l'interrupteur mécanique 12 est alors égale à la tension de limitation Uₗᵢₘ₁. Le passage du courant dans l'élément de limitation de tension 39 permet de limiter un accroissement de l'intensité I causé par le court-circuit, selon la formule suivante : $TA ≅ 1 - \frac{U}{{U}_{s}}$ avec :
- TA le taux de croissance de l'intensité I ;
- U la tension aux bornes du dispositif 10 ; et
- Uₛ la tension nominale du courant.

En pratique, les tensions induites par la résistance des conducteurs 7 et 8, et par le défaut sont considérées négligeables, et le taux d'accroissement TA est ainsi considéré égal à $1 - \frac{U}{{U}_{s}}$.

Sur la figure 3, la tension de limitation Uₗᵢₘ₁ est inférieure à la tension nominale du courant Uₛ, par exemple de l'ordre de 440V, pour une tension nominale du courant Uₛ de l'ordre de 450V. Ainsi, lorsque le module de commutation 32 est commandé dans la configuration bloquée, la tension U aux bornes du dispositif 10 est de l'ordre de 440V et l'intensité I croît plus lentement que lorsque le module de commutation 32 était dans la configuration passante.

La tenue diélectrique de l'interrupteur mécanique 12 continue de croître, et devient égale puis supérieure au palier P2. Ainsi, c'est le palier P2 qui est le plus grand palier inférieur ou égal à la tenue diélectrique de l'interrupteur mécanique 12. De préférence, la durée entre le moment où l'interrupteur mécanique 12 bascule en configuration ouverte et le moment où la tenue diélectrique de l'interrupteur mécanique 12 devient égale au palier P2 est égale à un deuxième seuil d'attente T₂.

L'unité de contrôle 60 détermine si la durée d'attente T est supérieure ou égale au deuxième seuil d'attente T₂ à l'étape S112. Si la durée d'attente T est inférieure au deuxième seuil d'attente T₂ alors l'unité de contrôle 60 attend une durée prédéterminée puis effectue à nouveau l'étape S112. Un fonctionnement itératif est alors mis en oeuvre.

Si la durée d'attente T est supérieure ou égale au deuxième seuil d'attente T₂, alors le module de commande de cellule 66 commande le module de commutation 42 en configuration bloquée et le module de commutation 32 en configuration passante à l'étape S114, qui correspond à l'instant D sur la figure 3. Les transistors 46 et 47 sont bloqués et ne conduisent pas le courant, qui circule alors dans l'élément de limitation de tension 49 et dans le module de commutation 32. La tension U aux bornes du dispositif 10, et donc aux bornes de l'interrupteur mécanique 12 est alors égale à la tension de limitation Uₗᵢₘ₂.

Sur la figure 3, la tension de limitation Uₗᵢₘ₂ est supérieure à la tension nominale du courant Uₛ, par exemple de l'ordre de 900V, pour une tension nominale du courant Uₛ de l'ordre de 450V. Ainsi, lorsque le module de commutation 32 est commandé dans la configuration bloquée, la tension U aux bornes du dispositif 10 est de l'ordre de 900V et l'intensité I décroît.

La tenue diélectrique de l'interrupteur mécanique 12 continue de croître et devient égale puis supérieure au palier P3, qui devient alors le plus grand palier inférieur ou égal à la tenue diélectrique de l'interrupteur mécanique 12.

De préférence, la durée entre le moment où l'interrupteur mécanique 12 bascule en configuration ouverte et le moment où la tenue diélectrique de l'interrupteur mécanique 12 devient égale au palier P3 est déterminée à l'avance, et est égale à un troisième seuil d'attente T₃.

L'unité de contrôle 60 détermine si la durée d'attente T est supérieure ou égale au deuxième seuil d'attente T₃ à l'étape S116. Si la durée d'attente T est inférieure au troisième seuil d'attente T₃ alors l'unité de contrôle 60 attend une durée prédéterminée puis effectue à nouveau l'étape S116. Un fonctionnement itératif est alors mis en oeuvre.

Si la durée d'attente T est supérieure ou égale au troisième seuil d'attente T₃, alors le module de commande de cellule 66 commande les modules de commutation 32 et 42 en configuration bloquée à l'étape S118, qui correspond à l'instant E sur la figure 3, le palier P3 étant formé des tensions de limitations Uₗᵢₘ₁ et Uₗᵢₘ₂ sommées entre elles.

Lors de l'étape S118, les transistors 34, 35, 44 et 45 sont bloqués. Le courant passe alors dans l'élément de limitation de tension 39 et dans l'élément de limitation 49. La tension U aux bornes du dispositif 10 est donc égale à la somme des tensions de limitation Uₗᵢₘ₁ et Uₗᵢₘ₂.

La tension aux bornes du dispositif 10 étant supérieure à la tension réseau et supérieure à la tension de limitation Uₗᵢₘ₂, qui était précédemment appliquée aux bornes du dispositif 10, l'intensité I du courant circulant dans le dispositif 10 décroît plus rapidement que lorsque la tension de limitation Uₗᵢₘ₂ était appliquée aux bornes du dispositif 10, jusqu'à devenir nulle, ainsi que visible dans la zone G à la figure 3. Lorsque l'intensité I devient nulle, le courant est interrompu entre la source 3 et la charge 5, et la tension aux bornes du dispositif 10 devient égale à la tension nominale du courant Uₛ, ainsi que visible à partir de l'instant F. De manière avantageuse, une durée de déclenchement T_{d} entre le moment où le court-circuit est détecté et le moment où tous les modules de commutation ont basculé dans la configuration bloquée, c'est-à-dire une durée entre les instants A et F, est inférieure à 1ms, de préférence inférieure à 800µs, de préférence encore, inférieure à 400µs.

Avantageusement, lorsque l'intensité I est devenue nulle, le module de commande de sectionneur 68 active les actionneurs 25 et 26, afin de basculer les sectionneurs 23 et 24 en configuration ouverte à l'étape S120. Par exemple, dans le cas où les actionneurs 25 et 26 sont des bobines, le module de commande de sectionneur 68 envoie une impulsion électrique aux actionneurs 25 et 26. Cela génère un champ magnétique qui interagit avec les sectionneurs 23 et 24 et leur permet de basculer en configuration ouverte. Le dispositif 10 est alors en configuration déclenchée.

Les sectionneurs 23 et 24 basculent en configuration ouverte seulement une fois le courant interrompu et servent à isoler galvaniquement la source 3 et la charge 5, mais ne participent pas à l'interruption du courant en tant que telle.

De manière avantageuse, les seuils d'attente T₁, T₂ et T₃ sont déterminés à l'avance, par exemple par le constructeur du dispositif 10, en fonction des caractéristiques de l'interrupteur mécanique 12 et des valeurs des seuils P1, P2 et P3, formés par les tensions de limitation Uₗᵢₘ₁ et Uₗᵢₘ₂. En variante, les seuils d'attente T₁, T₂ et T₃ sont déterminés par l'unité de contrôle 60, par exemple en fonction de l'intensité I du courant au moment où l'interrupteur mécanique 12 bascule en configuration ouverte, et des valeurs des seuils P1, P2 et P3. De manière plus générale, si le dispositif 10 comprend plus de deux modules, les seuils d'attente sont déterminés en fonction des caractéristiques de l'interrupteur mécanique 12 et des valeurs des seuils formés par les tensions de limitation des éléments de limitation de tension des modules de commutation.

La commande des modules de commutation 32 et 42 permet ainsi de limiter le courant plus tôt, en l'occurrence dès que le premier seuil d'attente T₁ est atteint, et de le limiter voire de le faire décroître le plus rapidement possible, en appliquant aux bornes du dispositif 10 une tension la plus proche de la tenue diélectrique de l'interrupteur mécanique. Cela permet notamment de limiter l'augmentation de l'intensité I, d'éviter une surchauffe des conducteurs 7 et 8, et également de choisir des transistors 34, 35, 44 et 45 dont la tenue en courant est moins élevée que pour un dispositif équivalent sans modules de commutations commandés successivement dans la configuration bloquée tout en garantissant un courant de fuite des éléments de limitation de tension 39 et 49 compatible avec la tenue énergétique des composants du dispositif 10.

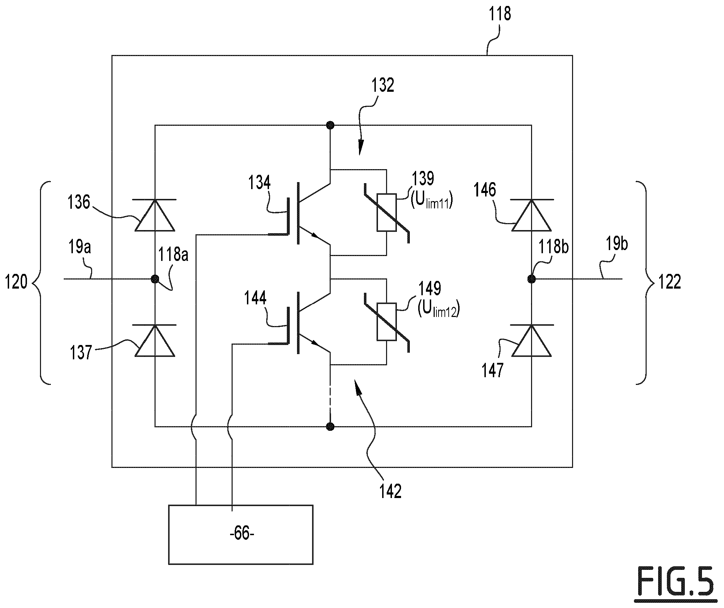

La figure 5 est un schéma d'une cellule d'interruption 118 d'un dispositif de protection électrique 10 conforme à un deuxième mode de réalisation de l'invention, en tant que variante à la cellule d'interruption 18. La cellule d'interruption 118 est, de manière similaire à la cellule d'interruption 18, connectée en parallèle de l'interrupteur mécanique 12, de telle sorte que l'entrée 12a et la sortie 12b de l'interrupteur mécanique 12 sont connectées respectivement à une entrée 118a et à une sortie 118b de la cellule d'interruption 118. Plus spécifiquement, l'entrée 12a de l'interrupteur mécanique 12 et l'entrée 118a de la cellule d'interruption 118 sont connectées par la liaison électrique 19a, non interruptible et la sortie 12b de l'interrupteur mécanique 12 est connectée à la sortie 118b de la cellule d'interruption 118 par la liaison électrique 19b également non interruptible. La cellule d'interruption 118 comprend deux branches de redressement 120 et 122. Chaque branche de redressement 120 et 122 comprend deux diodes, respectivement 136 et 137 pour la branche de redressement 120 et 146 et 147 pour la branche de redressement 122. Les diodes 136 et 137 sont connectées en anti-série l'une par rapport à l'autre, c'est-à-dire que les diodes 136 et 137 sont connectées en série et ne conduisent jamais le courant en même temps. Il en est de même pour les diodes 146 et 147.

L'entrée 118a et la sortie 118b de la cellule d'interruption 118 correspondent respectivement au point milieu de la branche de redressement 120, entre les diodes 136 et 137 et au point milieu de la branche de redressement 122, entre les diodes 146 et 147. Ainsi, la cellule d'interruption 118 est connectée en parallèle de l'interrupteur mécanique 12 par le point milieu de chaque branche de redressement 120 et 122.

La cellule d'interruption 118 comprend deux modules d'interruption 132 et 142, mais, en variante non représentée, comprend plus que deux modules d'interruption. Les modules d'interruption 132 et 142 sont connectés en parallèle des branches de redressement 120 et 122 et en série l'un à l'autre. En variante, la cellule d'interruption 118 comprend plus de deux modules d'interruption, connectés en série avec le module d'interruption 142 et en parallèle des branches 120 et 122, ainsi que symbolisé par la ligne en pointillés à la figure 5.

Les modules d'interruption 132 et 142 comprennent respectivement un élément semi-conducteur commandable en commutation, qui sont ici un transistor 134 et 144, et un élément de limitation de tension 139 et 149. L'élément de limitation de tension 139 est connecté en parallèle du transistor 134 et l'élément de limitation de tension 149 est connecté en parallèle du transistor 144. Les transistors 134 et 144 sont dans l'exemple de la figure 5, des transistors unidirectionnels en courant, dont le sens est indiqué par une flèche sur chaque transistor. Les éléments de limitation de tension 139 et 149 sont similaires, au moins fonctionnellement, aux éléments de limitation de tension 39 et 49 et ont une tension de limitation Uₗᵢₘ₁₁ et Uₗᵢₘ₁₂ respectivement. La tension de limitation Uₗᵢₘ₁₁ est avantageusement différente de la tension de limitation Uₗᵢₘ₁₂, mais en variante ces tensions sont identiques.

La cellule d'interruption 118 est configurée pour s'affranchir du sens de circulation du courant grâce aux diodes 136, 137, 146 et 147, de telle sorte que les modules de commutation 132 et 142, qui sont unidirectionnels, puissent être utilisés de façon bidirectionnelle. La disposition des diodes 136, 137, 146 et 147 permet de limiter le nombre de diodes dans la cellule d'interruption 118 à quatre. Ainsi, même lorsque la cellule d'interruption 118 comprend plus de deux modules de commutation, seules les quatre diodes 136, 137, 146 et 147 sont nécessaires à leur fonctionnement, limitant ainsi le nombre de diodes nécessaires par rapport à la cellule d'interruption 18.

Le procédé de commande du dispositif de protection 10 comprenant une cellule d'interruption 118 est similaire à celui décrit précédemment pour le dispositif de protection comprenant la cellule d'interruption 18, et n'est pas à nouveau décrit en détail.

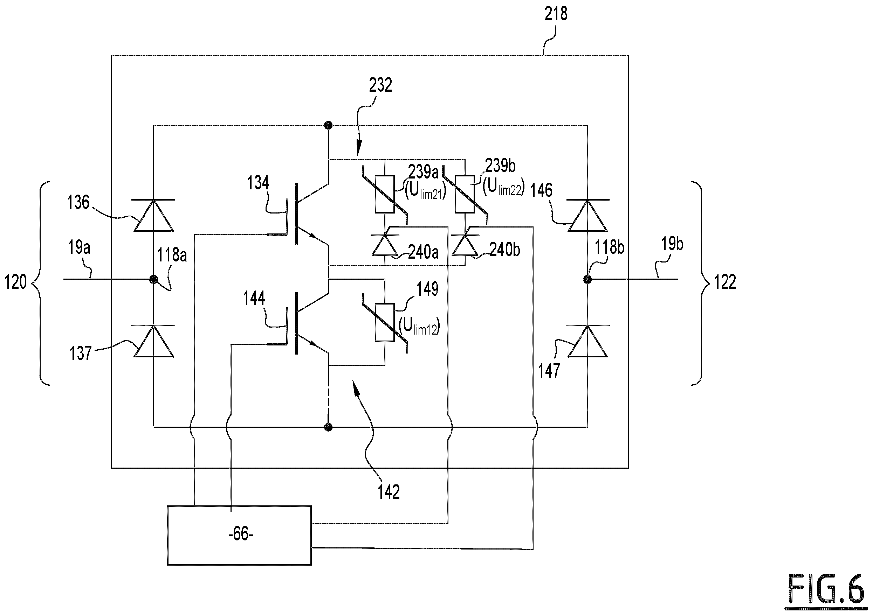

La figure 6 est un schéma électrique d'une cellule d'interruption 218 d'un dispositif de protection électrique 10 conforme à un troisième mode de réalisation de l'invention, en tant que mode de réalisation alternatif des cellules d'interruptions 18 et 118.

Les éléments de la cellule d'interruption 218 qui sont similaires à ceux de la cellule d'interruption 118 sont désignés par le même numéro de référence et ne sont pas à nouveau décrits en détail.

La cellule d'interruption 218 comprend un module de commutation 232, qui remplace le module de commutation 132 et qui diffère de ce dernier en ce qu'il comprend plusieurs éléments de limitation, ici deux éléments de limitation 239a et 239b. Le module de commutation 232 est dit module de commutation à tension variable. Les éléments de limitation 239a et 239b ont respectivement une tension de limitation Uₗᵢₘ₂₁ et Uₗᵢₘ₂₂ distinctes entre elles et différentes de la tension de limitation Ulim₁₂. Chaque élément de limitation 239a et 239b est respectivement associé à un organe de commutation 240a et 240b, avec lequel il connecté en série. Dans l'exemple de la figure 6, les organes de commutation 240a et 240b sont des thyristors. En variante, les organes de commutation 240a et 240b sont des semi-conducteurs commandables en commutation. L'élément de limitation 239a et son organe de commutation 240a associé sont connectés en parallèle du transistor 134. Il en est de même pour l'élément de limitation 239b et son organe de commutation 239b associé.

En variante non représentée, d'autres éléments de limitations, associés chacun avec un organe de commutation auxquels ils sont connectés en série, sont connectés en parallèle du transistor 134.

Dans ce mode de réalisation, le nombre N de modules de commutation est égal à 2.

Les tensions de limitations Uₗᵢₘ₁₂, Uₗᵢₘ₂₁ et Uₗᵢₘ₂₂ forment des paliers distincts les uns des autres. Le nombre de paliers formés est égal à : $Np = \left(x+1\right) \left(y+1\right) - 1$
Avec Np le nombre de paliers de commutation ;
x le nombre d'éléments de limitation en parallèle du transistor 134 ; et
y le nombre d'éléments de limitation en parallèle du transistor 144.

Dans l'exemple de la figure 6, x=2 et y=1, soit un total de 5 paliers P'1 à P'5 listés dans la table ci-dessous.

**[Table 2]**

| Palier | Valeur |
|---|---|
| P'1 | Uₗᵢₘ₂₁ |
| P'2 | Uₗᵢₘ₁₂ |
| P'3 | Uₗᵢₘ₂₂ |
| P'4 | Uₗᵢₘ₂₁ + Uₗᵢₘ₁₂ |
| P'5 | Uₗᵢₘ₂₂ + Uₗᵢₘ₁₂ |

Dans la table 2, les paliers P'1 à P'5 sont listés dans l'ordre croissant, avec P'1 le plus petit palier et P'5 le plus grand palier.

Dans, le mode de réalisation de la figure 6, le nombre Np de paliers de commutation vaut 5, ce qui est strictement supérieur à la valeur 2^{N}-1, avec N égal à 2, c'est-à-dire 3.

Les paliers sont formés au plus d'une tension de limitation d'un élément de limitation appartenant au module de commutation à tension variable 232. Autrement dit un même palier ne peut être formé avec les deux tensions de limitation Uₗᵢₘ₂₁ et Uₗᵢₘ₂₂. Dans le cas où le dispositif 10 comprend la cellule d'interruption 218, le module de commande de cellule 66 est en outre, configuré pour commander les organes de commutation 240a et 240b dans un état passant et dans un état bloqué, en plus d'être configuré pour commander en configuration bloquée le ou les modules de commutation dont les tensions de limitation des éléments de limitation forment un palier donné, le palier donné étant le plus grand palier inférieur ou égal à la tenue diélectrique de l'interrupteur mécanique 12, et commander en configuration passante les autres modules de commutation.

Lorsque les organes de commutation 240a ou 240b sont à l'état passant, ils laissent passer le courant, et lorsqu'ils sont à l'état bloqué, le courant ne peut pas circuler au travers des organes de commutation 240a et 240b.

Le procédé de commande du dispositif de protection 10 comprenant une cellule d'interruption 218 est similaire à celui décrit précédemment pour le dispositif de protection comprenant la cellule d'interruption 18, sauf pour les différences listées ci-dessous. Dans l'exemple de la figure 6, le procédé de commande sera réalisé pour cinq paliers P'1 à P'5, et non plus trois. De plus, lorsque le module de commande 66 commande en configuration bloquée le ou les modules de commutation dont les tensions de limitation des éléments de limitation forment un palier donné, le palier donné étant le plus grand palier inférieur ou égal à la tenue diélectrique de l'interrupteur mécanique 12, et que ce palier donné est formé par l'une des tensions de limitation d'un élément de commutation appartenant au module de commutation à tension variable 232, le module de commande de cellule 66 commande également l'organe de commutation associé dans l'état passant, et les autres organes de commutation module de commutation à tension variable 232 dans l'état bloqué.

Par exemple, si le palier P'4 est le plus grand palier inférieur ou égal à la tenue diélectrique de l'interrupteur mécanique 12, le module de commande de cellule 66 commande les modules 232 et 142 en configuration bloquée en bloquant les transistors 134 et 144, commande l'organe de commutation 240a dans l'état passant et l'organe de commutation 240b dans l'état bloqué. Le courant circule ainsi dans les éléments de limitation de tension 239a et 149. En pratique, le palier P'4 ne peut être atteint qu'après un passage transitoire par le palier P'2, afin de prendre en compte une durée nécessaire pour que le courant circulant au travers des thyristors se soit annulé, ce qui permet de rendre passant le transistor 240a et bloquer le thyristor 240b.

En variante non représenté, la cellule d'interruption 218 comprend plus de deux modules de commutation à tension variable.

Par exemple, dans le cas où la cellule d'interruption 118 ou 218 comprend trois modules de commutation à tension variable, le nombre Np de paliers de commutation est supérieur ou égal à 2³-1, soit 7. Selon un autre exemple où la cellule d'interruption 118 ou 218 comprend quatre modules de commutation à tension variable, le nombre Np de paliers de commutation est supérieur ou égal à 2⁴-1, soit 15. Les autres valeurs minimales possibles du nombre Np de paliers de commutation se déduisent de ce qui précède par le calcul.

En variante non représentée, la source 3 et la charge 5 sont reliées entre elles par plusieurs conducteurs de phase, par exemple trois. Dans ce cas, le dispositif 10 comprend avantageusement, pour chaque conducteur de phase, un interrupteur mécanique et une cellule d'interruption connectée en parallèle de l'interrupteur mécanique.

De manière optionnelle, un interrupteur mécanique est connecté au conducteur de neutre, une cellule d'interruption étant connectée en parallèle de l'interrupteur mécanique.

En variante non représentée, l'installation électrique 1 ne comprend pas de conducteur de neutre 8.

## Revendications

1. Dispositif de protection électrique (10), configuré pour être connecté entre une source (3) et une charge (5), le dispositif (10) comprenant :
- un interrupteur mécanique (12), configuré pour basculer entre une configuration fermée, dans laquelle l'interrupteur mécanique (12) conduit un courant circulant entre la source (3) et la charge (5), et une configuration ouverte, dans laquelle l'interrupteur mécanique (12) ne conduit pas le courant ;
- une cellule d'interruption (18 ; 118 ; 218), connectée en parallèle de l'interrupteur mécanique (12), la cellule d'interruption (18 ; 118 ; 218) comprenant N modules de commutation (32, 42 ; 132, 142 ; 232) connectés en série les uns aux autres, N étant supérieur ou égal à 2, chaque module de commutation (32, 42 ; 132, 142 ; 232) comprenant :
o au moins un élément semi-conducteur (34, 35, 44, 45 ; 134, 144) ;
o un élément de limitation de tension (39, 49 ; 139, 149 ; 239a, 239b), connecté en parallèle du ou des éléments semi-conducteurs (34, 35, 44, 45 ; 134, 144),
chaque élément de limitation de tension (39, 49 ; 139, 149 ; 239a, 239b) ayant une tension de limitation (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂), différente de la tension de limitation (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂) des autres éléments de limitation de tension (39, 49 ; 139, 149 ; 239a, 239b), chaque module de commutation (32, 42 ; 132, 142 ; 232) étant configuré pour basculer entre une configuration passante, dans laquelle le courant circule dans le ou dans l'un des éléments semi-conducteurs (34, 35, 44, 45 ; 134, 144) du module de commutation (32, 42 ; 132, 142 ; 232), et une configuration bloquée, dans laquelle si le courant circule dans le module de commutation (32, 42 ; 132, 142 ; 232), il circule dans l'élément de limitation de tension (39, 49 ; 139, 149 ; 239a, 239b) ;
- un capteur de courant (52) configuré pour mesurer une intensité (I) du courant ;
- une unité de contrôle (60) comprenant :
o un module de détection (62) configuré pour détecter un défaut électrique de type court-circuit en fonction de l'intensité (I) mesurée par le capteur de courant (52) ;
o un module de commande d'interrupteur mécanique (64), configuré pour commander l'interrupteur mécanique (12) dans la configuration ouverte lorsque qu'un défaut électrique est détecté,
o un module de commande de cellule (66), configuré pour commander chaque module de commutation (32, 42 ; 132, 142 ; 232) dans la configuration bloquée,
**caractérisé en ce qu'**une entrée (12a) de l'interrupteur mécanique (12) et une entrée (18a ; 118a ; 218a) de la cellule d'interruption (18 ; 118 ; 218) sont connectées l'une à l'autre par une liaison électrique (19a) non interruptible et une sortie (12b) de l'interrupteur mécanique (12) et une sortie (18b ; 118b ; 218b) de la cellule d'interruption (18 ; 118 ; 218) sont connectées l'une à l'autre par une liaison électrique (19b) non interruptible,
**en ce que** les tensions de limitation (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂), seules et/ou sommées entre elles, forment au moins 2^{N}-1 paliers (P1, P2, P3 ; P'1, P'2, P'3, P'4, P'5) distincts,
et **en ce que** le module de commande de cellule (66) est configuré pour :
o commander en configuration bloquée le ou les modules de commutation (32, 42 ; 132, 142 ; 232) dont les tensions de limitation (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂) des éléments de limitation de tension (39, 49 ; 139, 149 ; 239a, 239b) forment un palier (P1, P2, P3 ; P'1, P'2, P'3, P'4, P'5) donné, le palier (P1, P2, P3 ; P'1, P'2, P'3, P'4, P'5) donné étant le plus grand palier inférieur ou égal à une tenue diélectrique de l'interrupteur mécanique (12), et
o commander en configuration passante les autres modules de commutation (32, 42 ; 132, 142 ; 232).

2. Dispositif (10) selon la revendication 1 dans lequel chaque module de commutation (32, 42 ; 132, 142 ; 232) comprend deux éléments semi-conducteurs (34, 35, 44, 45) qui sont unidirectionnels en courant et connectés l'un à l'autre en anti-série, et pour chaque élément semi-conducteur (34, 35, 44, 45), une diode (36, 37, 46, 47) est connectée en anti-parallèle de l'élément semi-conducteur (34, 35, 44, 45).

3. Dispositif (10) selon la revendication 1 dans lequel :
- la cellule d'interruption (118 ; 218) comprend deux branches de redressement (120, 122), l'entrée (118a) et la sortie (118b) de la cellule d'interruption (118 ; 218) formant respectivement un point milieu de l'une des branches de redressement (120, 122), chaque branche de redressement (120, 122) comprenant deux diodes (136, 137, 146, 147) disposées de part et d'autre du point milieu, connectées en anti-série l'une par rapport à l'autre ;
- les modules de commutation (132, 142 ; 232) sont connectés en parallèle des branches de redressement (120, 122) ; et
- chaque module de commutation (132, 142 ; 232) comprend un seul élément semi-conducteur (134, 144) connecté en parallèle de l'élément de limitation de tension (139, 149 ; 239a, 239b).

4. Dispositif (10) selon la revendication 3, comprenant au moins trois modules de commutation.

5. Dispositif (10) selon l'une quelconque des revendications précédentes, dans lequel :
- l'un des modules de commutation (232), dit module de commutation à tension variable, comprend une pluralité d'éléments de limitation de tension (239a, 239b) ayant chacun une tension de limitation (Uₗᵢₘ₂₁, Uₗᵢₘ₂₂) différente les unes des autres et différente des tensions de limitation (Uₗᵢₘ₁₂) des éléments de limitation de tension (149) des autres modules de commutation (142) ;
- chaque élément de limitation de tension (239a, 239b) du module de commutation à tension variable (232) est associé à un organe de commutation (240a, 240b) avec lequel il est connecté en série, chaque élément de limitation de tension (239a, 239b) et son organe de commutation (240a, 240b) associé étant connectés en parallèle du ou des éléments semi-conducteurs (134) ;
- les paliers (P'1, P'2, P'3, P'4, P'5) sont formés au plus d'une tension de limitation (Uₗᵢₘ₂₁, Uₗᵢₘ₂₂) d'un élément de limitation de tension (239a, 239b) du module de commutation à tension variable (232), éventuellement sommée avec une ou des tensions de limitation (Uₗᵢₘ₁₂) des autres modules de commutation (142) ; et
- le module de commande de cellule (66) est en outre configuré pour, lorsqu'un élément de tension de limitation (239a, 239b) donné du module de commutation à tension variable (232) forme partie d'un palier (P'1, P'2, P'3, P'4, P'5) donné, le palier (P'1, P'2, P'3, P'4, P'5) donné étant le plus grand palier inférieur ou égal à la tenue diélectrique de l'interrupteur mécanique (12), basculer l'organe de commutation (240a, 240b) associé à l'élément de tension de limitation (239a, 239b) donné d'un état passant à un état bloqué, et commander les autres organes de commutation (240a, 240b) du module de commutation à tension variable (232) dans l'état bloqué.

6. Dispositif (10) selon l'une quelconque des revendications précédentes, comprenant en outre un sectionneur (23), connecté en série à l'interrupteur mécanique (12) sans être connecté en parallèle de la cellule d'interruption (18 ; 118 ; 218).

7. Dispositif (10) selon l'une quelconque des revendications précédentes, dans lequel une durée de déclenchement (T_{d}) entre la détection du défaut électrique de type court-circuit par le module de détection (62) et un passage de tous les modules de commutation (32, 42 ; 132, 142 ; 232) dans la configuration bloquée est inférieure à 1ms, de préférence inférieure à 800 µs, de préférence encore inférieure à 400 µs.

8. Installation électrique (1) comprenant une source (3), une charge (5) connectée à la source (3), et un dispositif de protection électrique (10) selon l'une quelconque des revendications précédentes, connecté entre la source (3) et la charge (5), une tension nominale (Uₛ) du courant circulant entre la source (3) et la charge (5) étant inférieure à 1500 V.

9. Procédé de commande d'un dispositif de protection électrique (10), le dispositif (10) étant selon l'une quelconque des revendications 1 à 7, le procédé comprenant au moins les étapes suivantes :
- mesure (S102) de l'intensité (I) du courant par le capteur de courant (52) ;
- détection (S104) d'un défaut électrique de type court-circuit par le module de détection (62), en fonction de l'intensité (I) mesurée par le capteur de courant (52) ;
- lorsqu'un défaut électrique de type court-circuit est détecté, commande de l'interrupteur mécanique (12) dans la configuration ouverte par le module de commande d'interrupteur mécanique (64) ; et
- lorsque la tenue diélectrique de l'interrupteur mécanique (12) est supérieure ou égale à un palier (P1, P2, P3 ; P'1, P'2, P'3, P'4, P'5) donné, le palier (P1, P2, P3 ; P'1, P'2, P'3, P'4, P'5) donné étant le plus grand palier inférieur ou égal à la tenue diélectrique de l'interrupteur mécanique (12), commande (S110, S114, S118) du ou des modules de commutation (32, 42 ; 132, 142 ; 232) dont les tensions de limitation (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂) des éléments de limitation (39, 49 ; 139, 149 ; 239a, 239b) forment le palier (P1, P2, P3 ; P'1, P'2, P'3, P'4, P'5) donné, et des autres modules de commutation (32, 42 ; 132, 142 ; 232) en configuration passante.

10. Procédé de commande selon la revendication 9, le dispositif de protection électrique (10) étant selon la revendication 5, le procédé comprenant en outre, lorsqu'un élément de tension de limitation (239a, 239b) donné du module de commutation à tension variable (232) forme partie d'un palier (P'1, P'2, P'3, P'4, P'5) donné et que la tenue diélectrique de l'interrupteur mécanique (12) est supérieure ou égale au palier donné (P'1, P'2, P'3, P'4, P'5), une étape de commande du composant de commutation (240a, 240b) associé à l'élément de tension de limitation (239a, 239b) donné dans l'état passant, et les autres composants de commutation (240a, 240b) du module de commutation à tension variable (232) dans l'état bloqué.

## Patentansprüche

1. Elektrische Schutzvorrichtung (10), ausgelegt zum Verbundenwerden zwischen einer Quelle (3) und einer Last (5), wobei die Vorrichtung (10) umfasst:
- einen mechanischen Schalter (12), ausgelegt zum Umschalten zwischen einer geschlossenen Konfiguration, in der der mechanische Schalter (12) einen Strom leitet, der zwischen der Quelle (3) und der Last (5) fließt, und einer offenen Konfiguration, in der der mechanische Schalter (12) den Strom nicht leitet;
- eine Unterbrechungszelle (18; 118; 218), die parallel zu dem mechanischen Schalter (12) geschaltet ist, wobei die Unterbrechungszelle (18; 118; 218) N Schaltmodule (32, 42; 132, 142; 232) umfasst, die miteinander in Reihe geschaltet sind, wobei N größer oder gleich 2 ist, wobei jedes Schaltmodul (32, 42; 132, 142; 232) umfasst:
o mindestens ein Halbleiterelement (34, 35, 44, 45; 134, 144);
o ein Spannungsbegrenzungselement (39, 49; 139, 149; 239a, 239b), das parallel zu dem oder den Halbleiterelementen (34, 35, 44, 45; 134, 144) geschaltet ist,
wobei jedes Spannungsbegrenzungselement (39, 49; 139, 149; 239a, 239b) eine Begrenzungsspannung (Uₗᵢₘ₁, Uₗᵢₘ₂; Uₗᵢₘ₁₁, Uₗᵢₘ₁₂; Uₗᵢₘ₂₁, Uₗᵢₘ₂₂) aufweist, die von der Begrenzungsspannung (Uₗᵢₘ₁, Uₗᵢₘ₂; Uₗᵢₘ₁₁, Uₗᵢₘ₁₂; Uₗᵢₘ₂₁, Uₗᵢₘ₂₂) der anderen Spannungsbegrenzungselemente (39, 49; 139, 149; 239a, 239b) verschieden ist, wobei jedes Schaltmodul (32, 42; 132, 142; 232) zum Umschalten zwischen einer leitenden Konfiguration, in der der Strom in dem oder in einem der Halbleiterelemente (34, 35, 44, 45; 134, 144) des Schaltmoduls (32, 42; 132, 142; 232) fließt, und einer gesperrten Konfiguration, in der, wenn der Strom in dem Schaltmodul (32, 42; 132, 142; 232) fließt, er in dem Spannungsbegrenzungselement (39, 49; 139, 149; 239a, 239b) fließt, ausgelegt ist;
- einen Stromsensor (52), der zum Messen einer Stromstärke (I) des Stroms ausgelegt ist;
- eine Steuereinheit (60), umfassend:
o ein Detektionsmodul (62), das zum Detektieren eines elektrischen Fehlers vom Typ Kurzschluss in Abhängigkeit von der Stromstärke (I), die durch den Stromsensor (52) gemessen wird, ausgelegt ist;
∘ ein Modul zur Ansteuerung des mechanischen Schalters (64), das zum Ansteuern des mechanischen Schalters (12) in der offenen Konfiguration ausgelegt ist, wenn ein elektrischer Fehler detektiert wird,
o ein Modul zur Ansteuerung der Zelle (66), das zum Ansteuern jedes Schaltmoduls (32, 42; 132, 142; 232) in der gesperrten Konfiguration ausgelegt ist,
**dadurch gekennzeichnet, dass** ein Eingang (12a) des mechanischen Schalters (12) und ein Eingang (18a; 118a; 218a) der Unterbrechungszelle (18; 118; 218) miteinander durch eine nicht unterbrechbare elektrische Verbindung (19a) verbunden sind und ein Ausgang (12b) des mechanischen Schalters (12) und ein Ausgang (18b; 118b; 218b) der Unterbrechungszelle (18; 118; 218) miteinander durch eine nicht unterbrechbare elektrische Verbindung (19b) verbunden sind,
dadurch, dass die Begrenzungsspannungen (Uₗᵢₘ₁, Uₗᵢₘ₂; Uₗᵢₘ₁₁, Uₗᵢₘ₁₂; Uₗᵢₘ₂₁, Uₗᵢₘ₂₂), allein und/oder miteinander aufsummiert, mindestens 2^{N}-1 unterschiedliche Stufen (P1, P2, P3; P'1, P'2, P'3, P'4, P'5) bilden,
und dadurch, dass das Modul zur Ansteuerung der Zelle (66) ausgelegt ist zum:
o Ansteuern in gesperrter Konfiguration des oder der Schaltmodule (32, 42; 132, 142; 232), deren Begrenzungsspannungen (Uₗᵢₘ₁, Uₗᵢₘ₂; Uₗᵢₘ₁₁, Uₗᵢₘ₁₂; Uₗᵢₘ₂₁, Uₗᵢₘ₂₂) der Spannungsbegrenzungselemente (39, 49; 139, 149; 239a, 239b) eine gegebene Stufe (P1, P2, P3; P'1, P'2, P'3, P'4, P'5) bilden, wobei die gegebene Stufe (P1, P2, P3; P'1, P'2, P'3, P'4, P'5) die größte Stufe ist, die kleiner oder gleich einer dielektrischen Festigkeit des mechanischen Schalters (12) ist, und
∘ Ansteuern der anderen Schaltmodule (32, 42; 132, 142; 232) in leitender Konfiguration.

2. Vorrichtung (10) nach Anspruch 1, in der jedes Schaltmodul (32, 42; 132, 142; 232) zwei Halbleiterelemente (34, 35, 44, 45) umfasst, die in Bezug auf Strom unidirektional und miteinander antiseriell geschaltet sind, und für jedes Halbleiterelement (34, 35, 44, 45) eine Diode (36, 37, 46, 47) antiparallel zu dem Halbleiterelement (34, 35, 44, 45) geschaltet ist.

3. Vorrichtung (10) nach Anspruch 1, in der:
- die Unterbrechungszelle (118; 218) zwei Gleichrichterzweige (120, 122) umfasst, wobei der Eingang (118a) und der Ausgang (118b) der Unterbrechungszelle (118; 218) jeweils einen Mittelpunkt eines der Gleichrichterzweige (120, 122) bilden, wobei jeder Gleichrichterzweig (120, 122) zwei Dioden (136, 137, 146, 147) umfasst, die beiderseits des Mittelpunkts angeordnet sind und antiseriell zueinander geschaltet sind;
- die Schaltmodule (132, 142; 232) parallel zu den Gleichrichterzweigen (120, 122) geschaltet sind; und
- jedes Schaltmodul (132, 142; 232) ein einziges Halbleiterelement (134, 144) umfasst, das parallel zu dem Spannungsbegrenzungselement (139, 149; 239a, 239b) geschaltet ist.

4. Vorrichtung (10) nach Anspruch 3, umfassend mindestens drei Schaltmodule.

5. Vorrichtung (10) nach einem der vorhergehenden Ansprüche, in der:
- eines der Schaltmodule (232), als Schaltmodul mit variabler Spannung bezeichnet, eine Mehrzahl von Spannungsbegrenzungselementen (239a, 239b) umfasst, die jeweils eine Begrenzungsspannung (Uₗᵢₘ₂₁, Uₗᵢₘ₂₂) aufweisen, die voneinander verschieden und von den Begrenzungsspannungen (Uₗᵢₘ₁₂) der Spannungsbegrenzungselemente (149) der anderen Schaltmodule (142) verschieden ist;
- jedes Spannungsbegrenzungselement (239a, 239b) des Schaltmoduls mit variabler Spannung (232) einem Schaltorgan (240a, 240b) zugeordnet ist, mit dem es in Reihe geschaltet ist, wobei jedes Spannungsbegrenzungselement (239a, 239b) und sein zugeordnetes Schaltorgan (240a, 240b) parallel zu dem oder den Halbleiterelementen (134) geschaltet sind;
- die Stufen (P'1, P'2, P'3, P'4, P'5) höchstens aus einer Begrenzungsspannung (Uₗᵢₘ₂₁, Uₗᵢₘ₂₂) eines Spannungsbegrenzungselements (239a, 239b) des Schaltmoduls mit variabler Spannung (232) gebildet sind, gegebenenfalls aufsummiert mit einer oder mehreren Begrenzungsspannungen (Uₗᵢₘ₁₂) der anderen Schaltmodule (142); und
- das Modul zur Ansteuerung der Zelle (66) ferner dazu ausgelegt ist, wenn ein gegebenes Element der Begrenzungsspannung (239a, 239b) des Schaltmoduls mit variabler Spannung (232) Teil einer gegebenen Stufe (P'1, P'2, P'3, P'4, P'5) bildet, wobei die gegebene Stufe (P'1, P'2, P'3, P'4, P'5) die größte Stufe ist, die kleiner oder gleich der dielektrischen Festigkeit des mechanischen Schalters (12) ist, das Schaltorgan (240a, 240b), das dem gegebenen Element der Begrenzungsspannung (239a, 239b) zugeordnet ist, von einem leitenden Zustand in einen gesperrten Zustand umzuschalten und die anderen Schaltorgane (240a, 240b) des Schaltmoduls mit variabler Spannung (232) in dem gesperrten Zustand anzusteuern.

6. Vorrichtung (10) nach einem der vorhergehenden Ansprüche, ferner umfassend einen Trennschalter (23), der in Reihe mit dem mechanischen Schalter (12) geschaltet ist, ohne parallel zu der Unterbrechungszelle (18; 118; 218) geschaltet zu sein.

7. Vorrichtung (10) nach einem der vorhergehenden Ansprüche, in der eine Auslösezeitdauer (T_{d}) zwischen der Detektion des elektrischen Fehlers vom Typ Kurzschluss durch das Detektionsmodul (62) und einem Übergang aller Schaltmodule (32, 42; 132, 142; 232) in die gesperrte Konfiguration kleiner als 1ms ist, vorzugsweise kleiner als 800 µs, weiter vorzugsweise kleiner als 400 µs.

8. Elektrische Anlage (1), umfassend eine Quelle (3), eine mit der Quelle (3) verbundene Last (5) und eine elektrische Schutzvorrichtung (10) nach einem der vorhergehenden Ansprüche, die zwischen der Quelle (3) und der Last (5) verbunden ist, wobei eine Nennspannung (Uₛ) des Stroms, der zwischen der Quelle (3) und der Last (5) fließt, kleiner als 1500 V ist.

9. Verfahren zur Steuerung einer elektrischen Schutzvorrichtung (10), wobei die Vorrichtung (10) nach einem der Ansprüche 1 bis 7 ist, wobei das Verfahren mindestens die folgenden Schritte umfasst:
- Messung (S102) der Stärke (I) des Stroms durch den Stromsensor (52) ;
- Detektion (S104) eines elektrischen Fehlers des Typs Kurzschluss durch das Detektionsmodul (62), in Abhängigkeit von der durch den Stromsensor (52) gemessenen Stärke (I) ;
- wenn ein elektrischer Fehler des Typs Kurzschluss detektiert wird, Ansteuerung des mechanischen Schalters (12) in die geöffnete Konfiguration durch das Steuermodul für den mechanischen Schalter (64) ; und
- wenn die dielektrische Festigkeit des mechanischen Schalters (12) größer oder gleich einer gegebenen Stufe (P1, P2, P3 ; P'1, P'2, P'3, P'4, P'5) ist, wobei die gegebene Stufe (P1, P2, P3; P'1, P'2, P'3, P'4, P'5) die größte Stufe ist, die kleiner oder gleich der dielektrischen Festigkeit des mechanischen Schalters (12) ist, Ansteuerung (S110, S114, S118) des einen oder der mehreren Schaltmodule (32, 42; 132, 142; 232), deren Begrenzungsspannungen (Uₗᵢₘ₁, Uₗᵢₘ₂; Uₗᵢₘ₁₁, Uₗᵢₘ₁₂; Uₗᵢₘ₂₁, Uₗᵢₘ₂₂) der Begrenzungselemente (39, 49 ; 139, 149 ; 239a, 239b) die gegebene Stufe (P1, P2, P3 ; P'1, P'2, P'3, P'4, P'5) bilden, und der anderen Schaltmodule (32, 42; 132, 142; 232) in leitender Konfiguration.

10. Steuerverfahren nach Anspruch 9, wobei die elektrische Schutzvorrichtung (10) gemäß Anspruch 5 ist, wobei das Verfahren ferner, wenn ein gegebenes Element der Begrenzungsspannung (239a, 239b) des Schaltmoduls mit variabler Spannung (232) Teil einer gegebenen Stufe (P'1, P'2, P'3, P'4, P'5) bildet und die dielektrische Festigkeit des mechanischen Schalters (12) größer oder gleich der gegebenen Stufe (P'1, P'2, P'3, P'4, P'5) ist, einen Schritt der Ansteuerung der Schaltkomponente (240a, 240b), die dem gegebenen Element der Begrenzungsspannung (239a, 239b) zugeordnet ist, in den leitenden Zustand, und der anderen Schaltkomponenten (240a, 240b) des Schaltmoduls mit variabler Spannung (232) in den gesperrten Zustand umfasst.

## Claims

1. An electrical protection device (10), configured to be connected between a source (3) and a load (5), the device (10) comprising:
- a mechanical switch (12), configured to switch between a closed configuration, wherein the mechanical switch (12) conducts a current flowing between the source (3) and the load (5), and an open configuration, wherein the mechanical switch (12) does not conduct the current;
- an interruption cell (18; 118; 218), connected in parallel with the mechanical switch (12), the interruption cell (18; 118; 218) comprising N switching modules (32, 42132, 142; 232) connected in series with each other, N being greater than or equal to two, each switching module (32, 42; 132, 142; 232) comprising:
o at least one semiconductor element (34, 35, 44, 45 ; 134, 144);
o a voltage-limiting element (39, 49; 139, 149; 239a, 239b) connected in parallel with the semiconductor element(s) (34, 35, 44, 45; 134, 144),
each voltage-limiting element (39, 49; 139, 149; 239a, 239b) having a limiting voltage (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂), different from the limiting voltage (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂) of the other voltage-limiting elements (39, 49; 139, 149; 239a, 239b), each switching module (32, 42; 132, 142; 232) being configured to switch between an on-configuration, wherein the current flows through the or one of the semiconductor elements (34, 35, 44, 45; 134, 144) of the switching module (32, 42; 132, 142; 232), and an off-configuration, wherein if the current flows through the switching module (32, 42; 132, 142; 232), it flows through the voltage-limiting element (39, 49 ; 139, 149 ; 239a, 239b);
- a current sensor (52), configured to measure a current intensity (I);
- a control unit (60) comprising:
o a detection module (62) configured to detect an electrical fault of the short-circuit type as a function of the intensity (I) measured by the current sensor (52);
o a mechanical switch control module (64), configured to control the mechanical switch (12) to enter the open configuration when an electrical fault is detected,
o a cell control module (66), configured to control each switching module (32; 42, 132; 142, 232) to enter the off-configuration,
**characterised in that** an input (12a) of the mechanical switch (12) and an input (18a; 118a; 218a) of the interruption cell (18; 118; 218) are connected to each other by a non-interruptible electrical link (19a) and an output (12b) of the mechanical switch (12) and an output (18b; 118b; 218b) of the interruption cell (18; 118; 218) are connected to each other by a non-interruptible electrical link (19b),
**in that** the limiting voltages (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂), alone and/or summed together, form at least 2^{N}-1 distinct levels (P1, P2, P3; P'1, P'2, P'3, P'4, P'5),
and **in that** the cell control module (66) is configured to:
o control the switching module(s) (32, 42; 132, 142; 232) whose limiting voltages (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂) of the voltage-limiting elements (39, 49; 139, 149 ; 239a, 239b) form a given level (P1, P2, P3; P'1, P'2, P'3, P'4, P'5) into the off-configuration, the given level (P1, P2, P3; P'1, P'2, P'3, P'4, P'5) being the highest level less than or equal to a dielectric strength of the mechanical switch (12), and
o control the other switching modules (32, 42; 132, 142; 232) to enter the on-configuration.

2. The device (10) according to claim 1, wherein each switching module (32, 42 ; 132, 142 ; 232) comprises two semiconductor elements (34, 35, 44, 45) which are unidirectional in current and connected to each other in series with opposite orientations, and for each semiconductor element (34, 35, 44, 45) a diode (36, 37, 46, 47) is connected in parallel with opposite orientations to the semiconductor element (34, 35, 44, 45).

3. The device (10) according to claim 1, wherein:
- the interruption cell (218) comprises two rectifying branches (120, 122), the input (118a) and the output (118b) of the interruption cell (218) respectively forming a midpoint of one of the rectifying branches (120, 122), each rectifying branch (120, 122) comprising two diodes (136, 137, 146, 147) arranged on either side of the midpoint, connected in series to each other with opposite orientations;
- the switching modules (132, 142; 232) are connected in parallel to the rectifying branches (120, 122); and
- each switching module (132, 142; 232) comprises a single semiconductor element (134, 144) connected in parallel to the voltage-limiting element (139, 149; 239a, 239b).

4. The device (10) according to claim 3, comprising at least three switching modules.

5. A device (10) according to any one of the preceding claims, wherein:
- one of the switching modules (232), referred to as a variable-voltage switching module, comprises a plurality of voltage-limiting elements (239a, 239b) each having a limiting voltage (Uₗᵢₘ₂₁, Uₗᵢₘ₂₂) different from each other and different from the limiting voltages (Uₗᵢₘ₁₂) of the voltage-limiting elements (149) of the other switching modules (142);
- each voltage-limiting element (239a, 239b) of the variable-voltage switching module (232) is associated with a switching member (240a, 240b) with which it is connected in series, each voltage-limiting element (239a, 239b) and its associated switching member (240a, 240b) being connected in parallel with the semiconductor element(s) (134);
- the levels (P'1, P'2, P'3, P'4, P'5) are formed by at most one limiting voltage (Uₗᵢₘ₂₁, Uₗᵢₘ₂₂) of a voltage-limiting element (239a, 239b) of the variable-voltage switching module (232), possibly summed with one or more limiting voltages (Uₗᵢₘ₁₂) of the other switching modules (142); and
- the cell control module (66) is further configured to, when a given limiting voltage element (239a, 239b) of the variable-voltage switching module (232) forms part of a given level (P'1, P'2, P'3, P'4, P'5), the given level (P'1, P'2, P'3, P'4, P'5) being the highest level less than or equal to the dielectric strength of the mechanical switch (12), toggle the switching member (240a, 240b) associated with the given limiting voltage element (239a, 239b) from an on-state to an off-state, and to control the other switching members (240a, 240b) of the variable-voltage switching module (232) to enter the off-state.

6. The device (10) according to any one of the preceding claims, further comprising a disconnector (23), connected in series with the mechanical switch (12) without being connected in parallel with the interruption cell (18; 118; 218).

7. The device (10) according to any one of the preceding claims, wherein a tripping time (T_{d}) between the detection of the electrical fault of the short-circuit type by the detection module (62) and all the switching modules (32, 42 ; 132, 142 ; 232) toggling into the off-configuration is less than 1 ms, preferably less than 800 µs, preferably less than 400 µs.

8. An electrical installation (1) comprising a source (3), a load (5) connected to the source (3), and an electrical protection device (10) according to any one of the preceding claims, connected between the source (3) and the load (5), a nominal voltage (Uₛ) of the current flowing between the source (3) and the load (5) being less than 1500 V.

9. A method for controlling an electrical protection device (10), the device (200) being according to any one of claims 1 to 7, the method comprising at least the following steps:
- measuring (S102) the intensity (I) of the current, by the current sensor (52);
- detecting (S104) an electrical fault of the short-circuit type, by the detection module (62), as a function of the intensity measured by the current sensor (52);
- when an electrical fault of the short-circuit type is detected, controlling the mechanical switch (12) to enter the open configuration by means of the mechanical switch control module (64); and
- when the dielectric strength of the mechanical switch (12) is greater than or equal to a given level (P1, P2, P3; P'1, P'2, P'3, P'4, P'5), the given level (P1, P2, P3; P'1, P'2, P'3, P'4, P'5) being the highest level less than or equal to the dielectric strength of the mechanical switch (12), controlling (S110, S114, S118) the switching module(s) (32, 42; 132, 142; 232) whose limiting voltages (Uₗᵢₘ₁, Uₗᵢₘ₂ ; Uₗᵢₘ₁₁, Uₗᵢₘ₁₂ ; Uₗᵢₘ₂₁, Uₗᵢₘ₂₂) of the limiting elements (39, 49; 139, 149; 239a, 239b) form the given level (P1, P2, P3; P'1, P'2, P'3, P'4, P'5), and of the other switching modules (32, 42; 132, 142; 232), to enter the on-configuration.

10. The control method as claimed in claim 9, the electrical protection device (10) being according to claim 5, the method further comprising, when a given limiting voltage element (239a, 239b) of the variable-voltage switching module (232) forms part of a given level (P'1, P'2, P'3, P'4, P'5) and the dielectric strength of the mechanical switch (12) is greater than or equal to the given level (P'1, P'2, P'3, P'4, P'5), a step of controlling the switching component (240a, 240b) associated with the limiting voltage element (239a, 239b) (239a, 239b) to enter the on-state, and the other switching components (240a, 240b) of the variable-voltage switching module (232) to enter the off-state, is performed.
